# EUROPÄISCHE PATENTSCHRIFT

(11) **EP 2 929 297 B1**
(45) Veröffentlichungstag und Bekanntmachung des Hinweises auf die Patenterteilung: **12.04.2017**
(21) Anmeldenummer: 13780333.4
(22) Anmeldetag: 15.10.2013
(51) Int. Cl.: G01D 5/14, G01D 5/20

(54) **SENSORVORRICHTUNG ZUR BESTIMMUNG MINDESTENS EINER ROTATIONSEIGENSCHAFT EINES ROTIERENDEN ELEMENTS**
SENSOR APPARATUS FOR DETERMINING AT LEAST ONE ROTATION PROPERTY OF A ROTATING ELEMENT
DISPOSITIF À CAPTEUR POUR LA DÉTERMINATION D'AU MOINS UNE PROPRIÉTÉ DE ROTATION D'UN ÉLÉMENT EN ROTATION

(30) Priorität: 05.12.2012 DE 102012222316
(43) Veröffentlichungstag der Anmeldung: 14.10.2015
(73) Patentinhaber: Robert Bosch GmbH, 70442 Stuttgart (DE)
(72) Erfinder: SCHNEIDER, Jens, 71229 Leonberg (DE); YASHAN, Andre, 70191 Stuttgart (DE); FEHLER, Sven, 71384 Weinstadt (DE); WENDT, Juergen, 70372 Stuttgart (DE)
(86) Internationale Anmeldenummer: PCT/EP2013/071468
(87) Internationale Veröffentlichungsnummer: WO 2014/086525

(56) Entgegenhaltungen:
- DE-A1- 10 258 846
- DE-A1- 19 731 555
- DE-A1-102006 061 577
- US-A1- 2004 056 748
- US-A1- 2012 293 167

## Beschreibung

### Stand der Technik

Aus dem Stand der Technik sind zahlreiche Sensoren bekannt, welche mindestens eine Rotationseigenschaft rotierender Elemente erfassen. Unter Rotationseigenschaften sind dabei allgemein Eigenschaften zu verstehen, welche die Rotation des rotierenden Elements zumindest teilweise beschreiben. Hierbei kann es sich beispielsweise um Winkelgeschwindigkeiten, Drehzahlen, Winkelbeschleunigungen, Drehwinkel, Winkelstellungen oder andere Eigenschaften handeln, welche eine kontinuierliche oder diskontinuierliche, gleichförmige oder ungleichförmige Rotation oder Drehung des rotierenden Elements charakterisieren können. Beispiele derartiger Sensoren sind in Konrad Reif: Sensoren im Kraftfahrzeug, 1. Auflage 2010, auf den Seiten 63 bis 73 und 120 bis 129 beschrieben. Ein weiteres Beispiel eines bekannten Sensors ist in der Patentschrift US 2004/0056748 beschrieben, wobei der Drehwinkel einer Welle mittels eines magnetoresistiven Elements, und das Drehmoment der Welle mittels einer Spule erfasst wird, indem Inkrementträger, welche an der Welle befestigt sind, abgetastet werden.

Ein besonderer Schwerpunkt der vorliegenden Erfindung, auf welche die Erfindung jedoch grundsätzlich nicht beschränkt ist, liegt in einer Drehzahlerfassung. Die Drehzahlerfassung kann insbesondere eingerichtet sein, um eine Drehzahl beispielsweise einer Kurbelwelle oder Nockenwelle zu erfassen.

Beim Einsatz von beispielsweise Drehzahlsensoren in Hybridfahrzeugen oder Elektrofahrzeugen werden hohe Ansprüche an die mechanische Robustheit und die Messgenauigkeit gestellt. Bekannte Drehzahlsensoren stellen jedoch nicht die nach den neuesten Anforderungen geforderte Genauigkeit über den gesamten Drehzahlbereich, insbesondere im unteren und oberen Randbereich, von bei Elektromotoren üblichen 1 bis ca. 25.000 Umdrehungen pro Minute bereit.

### Offenbarung der Erfindung

Mit der erfindungsgemäß vorgeschlagenen Lösung wird, gegenüber nach den im Stand der Technik bekannten Sensorvorrichtungen, eine Sensorvorrichtung bereitgestellt, die eine über den gesamten Drehzahlbereich des rotierenden Elements hinweg erhöhte Messgenauigkeit aufweist.

Es wird dementsprechend eine Sensorvorrichtung zur Bestimmung mindestens einer Rotationseigenschaft eines rotierenden Elements, insbesondere zur Bestimmung der Position und/oder der Drehzahl einer Welle in einer Antriebsmaschine, vorgeschlagen.

Die Sensorvorrichtung weist mindestens einen mit dem rotierenden Element verbindbaren Inkrementträger auf. Ein Inkrementträger wird üblicherweise bei inkrementellen Messmethoden verwendet. Die bei Drehzahlsensoren häufig zum Einsatz gelangende Messmethode ist eine inkrementelle Zählmethode, bei welcher durch eine Zählung von Einzelwerten, auch Inkrementwerte genannt, die Wertänderung pro Zeit gemessen wird und dadurch auf verschiedene Rotationseigenschaften, wie beispielsweise die Drehzahl oder eine der anderen zuvor genannten Eigenschaften geschlossen werden kann. Der Inkrementträger weist hierzu üblicherweise entlang eines Weges periodisch angeordnete Wertgeber auf, welche jeweils einzeln erfassbar sind und jeweils die Erhöhung oder Verringerung des Zählwertes um ein Inkrement auslösen.

Der Inkrementträger kann beispielsweise aus einem auf einen entsprechenden magnetischen Sensor abgestimmten Zahnrad aus einem magnetisierbaren Material bestehen, welches, sofern es durch ein äußeres Magnetfeld bewegt wird, im Bereich eines jeden Zahnes und einer jeden zwischen zwei Zähnen angeordneten Lücke durch eine unterschiedliche Beeinflussung des Magnetfeldes erfassbare Ereignisse erzeugt. Ebenfalls ist es denkbar, dass der Inkrementträger in Form eines Multipolrades gebildet ist, welches üblicherweise durch eine Abfolge von permanentmagnetischen Bereichen mit einer alternierenden, bzw. sich abwechselnden magnetischen Polarisierung gebildet ist. Ein derartiges Multipolrad kann hierbei in der Lage sein, durch Ausbildung einer Vielzahl an eigenen magnetischen Feldbereichen durch Interferenz, bspw. einer Überlagerung, mit einem äußeren Magnetfeld, sprich durch eine Messung der Änderung des äußeren Magnetfeldes, oder aber durch eine unmittelbare Messung der Vielzahl an magnetischen Feldbereichen zwischen zwei benachbarten permanentmagnetischen Bereichen, eine Vielzahl erfassbarer magnetischer Ereignisse zu erzeugen.

Nach dem der Erfindung zugrunde liegenden Gedanken weist die Sensorvorrichtung weiterhin mindestens einen Magnetfelderzeuger zur Erzeugung eines magnetischen Feldes am Ort des rotierenden Elements auf, welcher beispielsweise durch einen Permanentmagneten gebildet sein kann. Weiterhin weist die Sensorvorrichtung wenigstens einen ersten Magnetsensor und wenigstens einen zweiten Magnetsensor auf, wobei der erste Magnetsensor ein erstes Sensorsignal und der zweite Magnetsensor ein zweites Sensorsignal erzeugt. Das von dem ersten Magnetsensor und/oder dem zweiten Magnetsensor erzeugte Sensorsignal kann beispielsweise lediglich eine Information über die zeitliche Abfolge der Erfassung einzelner durch die Rotation des rotierenden Elements erzeugten inkrementellen Ereignisse enthalten, oder aber in bereits vorab ausgewerteter, aufbereiteter Form eine Information über die gewünschte Rotationseigenschaft darstellen.

Die erfindungsgemäße Sensorvorrichtung sieht weiterhin vor, dass der erste Magnetsensor ein passiv induktiver Sensor ist, welcher bevorzugt mindestens eine Spule aufweist, die zur Erfassung eines durch Wirbelströme des rotierenden Elements erzeugten oder veränderten Magnetfelds eingerichtet ist. Der zweite Magnetsensor ist ein aktiver Sensor, welcher hierbei bevorzugt mindestens ein Hall-Element und/oder mindestens ein magnetoresistives Element aufweist.

Durch diese Kombination eines passiv induktiven Sensors zusammen mit einem aktiven Sensor wird eine ebenso in positiver Weise nutzbare Kombination der unterschiedlichen Eigenschaften der beiden Sensortypen ermöglicht. Ein besonderer Vorteil des Vorsehens beispielsweise einer Spule als passiv induktiver Magnetsensor, welche nach dem Induktionsprinzip arbeitet, besteht darin, dass der Magnetsensor, aufgrund der zunehmenden Rotationsgeschwindigkeit des rotierenden Elements und der ebenfalls zunehmenden Geschwindigkeit der Abfolge der erzeugten einzelnen magnetischen Ereignisse, eine messbare und ebenso zunehmende Spannung innerhalb der Spule induziert wird. Folglich ist die maximal erfassbare Drehzahl nicht durch eine mangelnde Auflösung der einzelnen Ereignisse begrenzt, sondern lediglich durch elektrotechnische Eigenschaften der Spule, beispielsweise der Resonanzfrequenz, begrenzt. Die gemessene Induktionsspannung weist hierbei in besonders vorteilhafter Weise mit zunehmender Rotationsgeschwindigkeit ein sich verbesserndes Signal/Rausch-Verhältnis auf. Anders ausgedrückt, der Signal/Rausch-Abstand steigt. Hierdurch eignet sich der passiv induktive Sensor besonders gut zur Messung hoher Drehzahlen. Wohingegen ein passiv induktiver Sensor zur Messung einer niedrigen Drehzahl aufgrund des folglich ebenso niedrigen Signal/Rausch-Abstandes weniger geeignet ist.

In einem niedrigeren Drehzahlbereich kommt in vorteilhafter Weise der Einsatz eines aktiven Magnetsensors, beispielsweise in Form eines Hall-Elements, zum Tragen. Mit Hilfe dieses aktiven Magnetsensors sind Drehzahlen, bzw. Drehgeschwindigkeiten bis zu einem Drehzahlbereich von weniger als 1 Umdrehung pro Minute bis einem Stillstand des rotierenden Elements hin, mit einer entsprechend hohen Genauigkeit des Messsignals erfassbar. Hingegen ist die von dem aktiven Magnetsensor erfassbare Drehzahl bzw. Drehgeschwindigkeit üblicherweise aufgrund einer limitierten Bandbreite der Signalverarbeitung zur Störunterdrückung auf eine Inkrementfrequenz, sprich auf die Frequenz der erfassten magnetischen Ereignisse, auf derzeit ca. 10 bis 20 kHz begrenzt. Die Inkrementfrequenz entspricht üblicherweise der mit der Anzahl der Ereignisgeber multiplizierten Drehfrequenz, bzw. Drehzahl des rotierenden Elements.

Demgemäß wird durch den Einsatz beider Sensortypen in vorteilhafter Weise eine Erweiterung des messbaren Drehzahlbereichs von ca. 0 Umdrehungen pro Minute bis hin zu über 20.000 Umdrehungen pro Minute realisierbar. Theoretisch ist es jedoch ebenfalls denkbar, dass die maximale Drehzahl im Bereich von 80.000 bis 100.000 Umdrehungen pro Minute liegen kann. Ebenso wird durch die Ausnutzung der den beiden Sensortypen zugrunde liegenden Messprinzipien, insbesondere durch die Auswertung von wenigstens einem der Sensorsignale ermöglicht, dass eine im gesamten Drehzahlbereich hohe Genauigkeit des Messsignals bereitgestellt werden kann.

Ebenso wird in einem sich mit dem Drehzahlbereich des aktiven Sensors überlappenden Drehzahlbereich des passiv induktiven Sensors ein in Abhängigkeit der Signalgenauigkeit redundantes Sensorsignal bereitgestellt.

Alternativ zu dem passiv induktiven Sensor können ebenso weitere Sensorarten, beispielsweise ein aktiv induktiver Sensor, verwendet werden, die einen mit steigender Drehzahl ebenso steigenden Signal/Rausch-Abstand aufweisen.

Nach einer weiteren Ausführungsform der Sensorvorrichtung kann es vorgesehen sein, dass der erste Magnetsensor und der zweite Magnetsensor in radialer Richtung zu dem rotierenden Element hintereinander angeordnet sind. Anders ausgedrückt, können der erste Magnetsensor und der zweite Magnetsensor hierbei von dem Magnetfelderzeuger aus in Richtung des rotierenden Elements betrachtet bevorzugt hintereinander nachfolgend angeordnet sein. Folglich weist einer der Magnetsensoren einen größeren radialen Abstand zu dem rotierenden Element auf, als der andere Magnetsensor. Auf diese Weise kann weiterhin eine Ausgestaltung der Sensorvorrichtung beispielsweise als Steckfühler, mit einer lediglich geringfügig erhöhten Länge, gewährleistet werden. Folglich sind keine wesentlichen Änderungen zur Aufnahme der vorgeschlagenen Sensorvorrichtung erforderlich.

Alternativ kann es nach einer weiteren Ausführungsform der Sensorvorrichtung ebenso vorgesehen sein, dass der erste Magnetsensor und der zweite Magnetsensor zu dem rotierenden Element in radialer Richtung nebeneinander angeordnet sind. Hierbei können der erste und zweite Magnetsensor sowohl in Rotationsrichtung des rotierenden Elements, oder aber in einer Richtung parallel zur Rotationsachse des rotierenden Elements benachbart angeordnet sein. Hierdurch können sowohl der erste als auch der zweite Magnetsensor auf vorteilhafte Weise einen in optimaler Weise möglichst geringen Abstand zum rotierenden Element einhalten.

Weiterhin kann es vorgesehen sein, dass die Sensorvorrichtung ein Flussleitelement aufweist, welches bevorzugt von der Spule des ersten Magnetsensors wenigstens teilweise umschlossen ist. Das Flussleitelement kann bevorzugt aus einem ferromagnetischen Material gebildet sein. Gleichzeitig bildet das Flussleitelement einen Kern der Spule und erhöht hierdurch aufgrund der erhöhten magnetischen Flussdichte im Flussleitelement den Induktionsstrom, was weiterhin in vorteilhafter Weise eine Steigerung des Signal/Rausch-Abstands zur Folge hat. Das Flussleitelement grenzt hierzu bevorzugt über eine gemeinsam gebildete Kontaktfläche mit dem Magnetfelderzeuger an diesen an.

Nach einer weiteren Ausgestaltung der Sensorvorrichtung kann es vorgesehen sein, dass der erste Magnetsensor und der zweite Magnetsensor eingerichtet sind, um einen gemeinsamen Inkrementträger magnetisch abzutasten.

Gemäß einer weiteren Ausführungsform der Sensorvorrichtung kann es vorgesehen sein, dass der wenigstens eine Inkrementträger ein Zahnrad ist, wobei das Zahnrad aus einem zumindest teilweise ferromagnetischen Werkstoff, bevorzugt mit einer hohen magnetischen Leitfähigkeit besteht.

Alternativ oder zusätzlich kann bei einer weiteren Ausführungsform der Erfindung der wenigstens eine Inkrementträger ein magnetisches Multipolrad sein. Das Multipolrad kann hierzu beispielsweise durch in einem Kunststoff eingeschlossene permanentmagnetische Partikel mit bereichsweise alternierender Polarisierung gebildet sein.

Ebenso kann es nach einer weiteren Ausführungsform vorgesehen sein, dass der wenigstens eine Inkrementträger permanentmagnetische Bereiche aufweist und der Inkrementträger zur Bildung von Wirbelströmen eingerichtet ist. Hierbei kann es sich bevorzugt um einen Inkrementträger in Form eines zuvor beschriebenen magnetischen Polrades handeln.

Gemäß einer weiteren Ausführungsform der Erfindung kann es vorgesehen sein, dass die Sensorvorrichtung weiterhin wenigstens eine Auswerteeinheit umfasst, welche bevorzugt dazu eingerichtet ist, das erste Sensorsignal und/oder das zweite Sensorsignal auszuwerten. Unter einer Auswertung des Sensorsignals wird hier allgemein jeder beliebige Prozessschritt verstanden, der der Gewinnung einer Information über eine Rotationseigenschaft des rotierenden Elements ausgehend von dem Sensorsignal dient. Beispielsweise bei der Drehzahl als zu erfassende Rotationseigenschaft, kann es hierbei vorgesehen sein, dass für jeden Magnetsensor der Sensorvorrichtung eine eigene Auswerteeinheit vorgesehen ist, welche lediglich das jeweils eine Sensorsignal des ihr zugewiesenen Magnetsensors zumindest teilweise, bevorzugt jedoch vollständig auswertet und die gewonnene Information über die Drehzahl des rotierenden Elements in Form eines Datensignals, beispielsweise einer nicht zur Sensorvorrichtung gehörenden Motorsteuerung, insbesondere einem Motorsteuergerät, zur Verfügung stellt. In diesem Falle empfängt das beispielsweise Motorsteuergerät von jeder Auswerteeinheit eine eigene Drehzahlinformation und muss diese in Abhängigkeit der Drehzahlinformation, insbesondere der Drehzahl selbst, auf die Genauigkeit der jeweiligen Drehzahlinformation hin vergleichen und/oder überprüfen.

Alternativ oder zusätzlich kann es jedoch auch vorgesehen sein, dass die Sensorvorrichtung lediglich eine Auswerteeinheit umfasst, welche zur Auswertung mehrerer, von einer Mehrzahl von Magnetsensoren erzeugter Sensorsignale ausgebildet ist. Gemäß dieser Ausführungsform mit nur einer Auswerteeinheit wird in vorteilhafter Weise die Möglichkeit geschaffen, dass eine andernfalls notwendige Mehrzahl an Datenleitungen zwischen der Sensorvorrichtung und einer möglichen Motorsteuerung minimiert werden kann. Weiterhin ist es möglich, eine Auswertung der Gesamtheit der einzelnen Sensorsignale einer Sensorvorrichtung mit einer im Wesentlichen an die Sensorvorrichtung angepassten Auswerteelektronik derart in der Sensorvorrichtung zu implementieren, dass eine Gewinnung der Information über die Rotationseigenschaft in annähernd Realzeit durchgeführt werden kann.

Eine weiterhin vorteilhafte Ausgestaltung der Sensorvorrichtung mit wenigstens einer Auswerteeinheit kann darin bestehen, dass die wenigstens eine Auswerteeinheit einen Signalausgang aufweist, an welchem die Auswerteeinheit in Abhängigkeit der Drehzahl des rotierenden Elements lediglich eines der ausgewerteten Sensorsignale bereitstellt. Anders ausgedrückt, weisen die eine oder mehreren Auswerteeinheiten je einen Signalausgang auf, an welchem sie, im Falle einer Mehrzahl an Auswerteeinheiten, das jeweils ausgewertete Sensorsignal oder, im Falle einer einzelnen Auswerteeinheit, eines der Mehrzahl an ausgewerteten Sensorsignalen bereitstellt.

Die zuvor beschriebenen Ausführungsformen der Sensorvorrichtung gelangen bevorzugt in einem erfindungsgemäßen Sensorsystem zur Bestimmung mindestens einer Rotationseigenschaft eines rotierenden Elements zum Einsatz, wobei das Sensorsystem weiterhin eine mit der Sensorvorrichtung verbindbare Steuerung umfasst, welche eingerichtet ist, um in dem mindestens einen ersten Drehzahlbereich des rotierenden Elements wenigstens das vom ersten Magnetsensor erzeugte erste Sensorsignal zu erfassen und um in dem mindestens einen zweiten Drehzahlbereich wenigstens das vom zweiten Magnetsensor erzeugte zweite Sensorsignal zu erfassen. Dies ist unabhängig davon, ob bereits in zuvor beschriebener Weise eine Vorauswahl des Sensorsignals in Abhängigkeit des jeweiligen Drehzahlbereichs von einer möglichen Auswerteeinheit der Sensorvorrichtung vorgenommen wird oder ob eine entsprechende Auswahl in der mit der Sensorvorrichtung verbundenen Steuerung erfolgt. Bei dieser Steuerung kann es sich beispielsweise um eine üblicherweise in Motoren zum Einsatz kommende Motorsteuerung, insbesondere einer so genannten ECU, oder aber beispielsweise auch um eine mit einer Motorsteuerung in verbindbare Sensorsteuerung handeln.

Alternativ oder zusätzlich kann es in vorteilhafter Weise vorgesehen sein, dass die Steuerung des Sensorsystems eingerichtet ist, um in einem dritten Drehzahlbereich des rotierenden Elements sowohl das vom ersten Magnetsensor erzeugte erste Sensorsignal als auch das vom zweiten Magnetsensor erzeugte zweite Sensorsignal zu erfassen. Der erwähnte dritte Drehzahlbereich zeichnet sich hierbei bevorzugt dadurch aus, dass das erste Sensorsignal des ersten Magnetsensors, als auch das zweite Sensorsignal des zweiten Magnetsensors in Abhängigkeit beispielsweise der Drehzahl des rotierenden Elements jeweils die notwendige Genauigkeit zur Gewinnung beispielsweise der Drehzahl aufweist und eine gleichzeitige und redundante Auswertung beider Sensorsignale ermöglicht wird. Aufgrund der Auswertung beider Sensorsignale, welche wiederum aufgrund der beiden unterschiedlichen Magnetsensoren unabhängig voneinander erzeugt werden, kann eine weitere Steigerung der Genauigkeit der erfassten Rotationseigenschaft in weiterhin vorteilhafter Weise geschaffen werden.

### Kurze Beschreibung der Zeichnungen

Nachfolgend wird die Erfindung anhand einer bevorzugten Ausführungsform näher beschrieben.

Hierzu zeigen die Darstellungen:
- Fig. 1: eine schematische Darstellung einer bevorzugten Ausführungsform der erfindungsgemäßen Sensorvorrichtung, und
- Fig. 2: eine schematische Darstellung der bevorzugten Ausführungsform eines Sensorsystems mit einer erfindungsgemäßen Sensorvorrichtung.

### Ausführungsformen der Erfindung

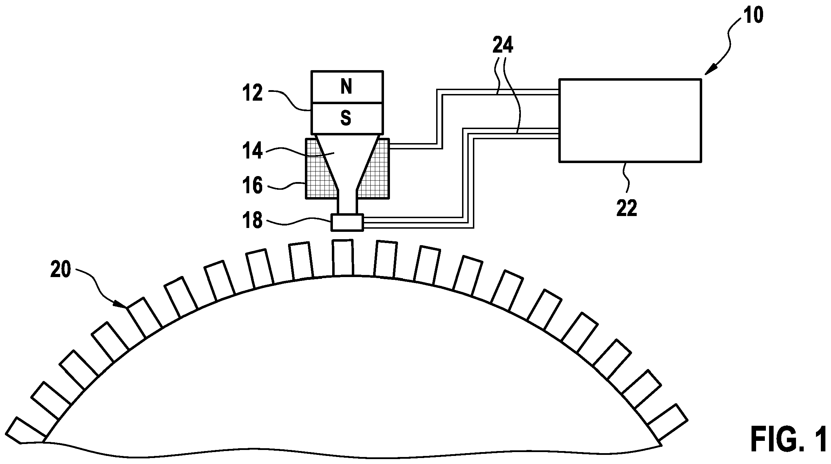

Wie der Darstellung von Figur 1 entnommen werden kann, weist die dargestellte Ausführungsform der Sensorvorrichtung 10 einen Magnetfelderzeuger 12 auf, welcher beispielsweise durch einen Permanentmagneten gebildet sein kann. Wie dargestellt umfasst die Sensorvorrichtung 10 weiterhin ein flächig an den Südpol des als Dipolmagnet dargestellten Magnetfelderzeugers 12 angeordnetes Flussleitelement 14, welches sich zugleich in Richtung des nicht dargestellten rotierenden Elements hin erstreckt. Der Magnetfelderzeuger 12 kann hierbei alternativ auch mit einer gegenläufigen polaren Ausrichtung als der dargestellten Anordnung vorgesehen sein kann.

Weiterhin ist ein erster Magnetsensor 16, bevorzugt in Form einer das Flussleitelement 14 umschließenden Spule 16, sowie ein zweiter Magnetsensor 18, bevorzugt an der dem rotierenden Element zuweisenden Stirnfläche des Flussleitelements 14, angeordnet. Der zweite Magnetsensor 18, welcher beispielsweise durch ein Hall-Element oder ein magnetoresistives Element gebildet sein kann, wird hierbei bevorzugt nicht von der Spule des ersten Magnetsensors 16 umschlossen.

Wie der Darstellung von Figur 1 weiterhin entnommen werden kann, ist in Verlängerung des Magnetfelderzeugers 12 in Richtung des zweiten Magnetsensors 18 ein Inkrementträger 20 angeordnet, welcher bevorzugt mit einem nicht dargestellten rotierenden Element verbunden ist. Der Rotation des rotierenden Elements folgend wird der Inkrementträger 20 folglich im Bereich des zweiten Magnetsensors 18 im Wesentlichen senkrecht zu einem von dem Magnetfelderzeuger 12 erzeugten magnetischen Feld vorbeigeführt. Hierdurch wird wie in zuvor beschriebener Weise das von dem Magnetfelderzeuger 12 erzeugte Magnetfeld beeinflusst, bzw. verändert, wobei die Änderung des Magnetfelds von dem zweiten Magnetsensor 18 sowie auch von dem ersten Magnetsensor 16 erfasst werden kann.

Die dargestellte Ausführungsform der Sensorvorrichtung 10 weist darüber hinaus weiterhin eine Auswerteeinheit 22 auf, welche über elektrische Leitungen 24 mit dem ersten Magnetsensor 16 und dem zweiten Magnetsensor 18 in Verbindung steht. Über die elektrischen Leitungen 24 wird bevorzugt das jeweils von dem ersten Magnetsensor 16 und dem zweiten Magnetsensor 18 erzeugte jeweilige Sensorsignal an die Auswerteeinheit 22 übertragen.

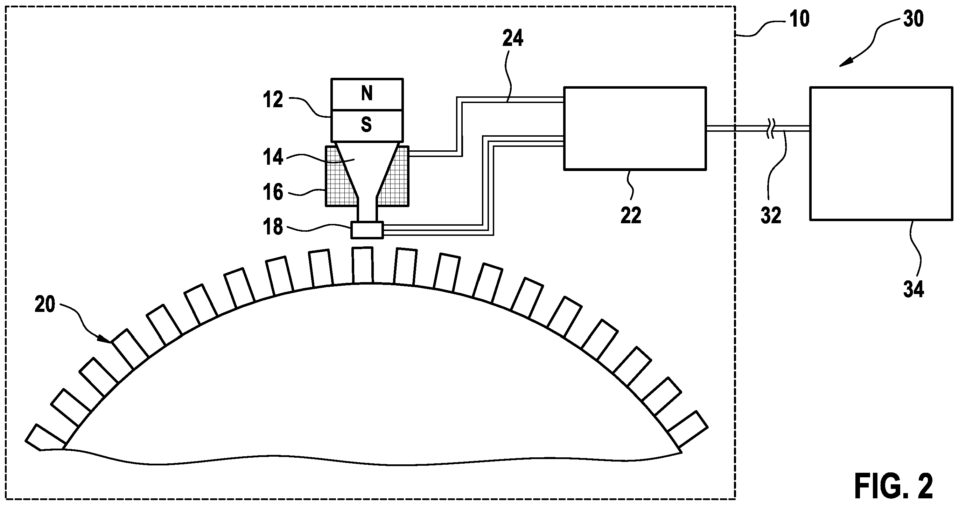

Der Darstellung von Figur 2 ist darüber hinaus zu entnehmen, dass ein Sensorsystem 30 bevorzugt eine über weitere Datenleitungen 32 mit der Sensorvorrichtung 10 in Verbindung stehende Steuerung 34 umfasst, welche beispielsweise eine bekanntermaßen bei Verbrennungsantrieben, Elektroantrieben oder Hybridantrieben zum Einsatz gelangende Motorsteuerung umfassen, oder eine solche sein kann. Die Anzahl der zwischen der Auswerteeinheit 22 und der Steuerung 34 dargestellten Datenleitungen 32 ist lediglich schematisch und beschränken die Datenleitungen 32 nicht auf eine Anzahl von 2 oder 3 Verbindungsleitungen. Andere Schnittstellenarten mit mehr oder weniger Verbindungsleitungen sind ebenso möglich. Zuvor Gesagtes gilt gleichfalls für die in Figur 1 und Figur 2 dargestellten Verbindungsleitungen zwischen dem ersten Magnetsensoren 16 und der Auswerteeinheit 22, sowie dem zweiten Magnetsensor 18 und der Auswerteeinheit 22.

## Patentansprüche

1. Sensorvorrichtung (10) zur Bestimmung mindestens einer Rotationseigenschaft eines rotierenden Elements, umfassend mindestens einen mit dem rotierenden Element verbindbaren Inkrementträger (20), wobei die Sensorvorrichtung (10) mindestens einen Magnetfelderzeuger (12) zur Erzeugung eines magnetischen Feldes am Ort des rotierenden Elements umfasst, wobei die Sensorvorrichtung (10) wenigstens einen ersten Magnetsensor (16) und wenigstens einen zweiten Magnetsensor (18) aufweist, wobei der erste Magnetsensor (16) ein erstes Sensorsignal und der zweite Magnetsensor (18) ein zweites Sensorsignal erzeugt, dass der erste Magnetsensor (16) ein induktiver Sensor ist, wobei der erste Magnetsensor (16) mindestens eine Spule aufweist und zur Erfassung eines durch Wirbelströme des rotierenden Elements erzeugten oder veränderten Magnetfelds eingerichtet ist, wobei der zweite Magnetsensor (18) ein aktiver Sensor ist, wobei der zweite Magnetsensor (18) mindestens ein Hall-Element und/oder mindestens ein magnetoresistives Element aufweist, **dadurch gekennzeichnet dass** der erste Magnetsensor (16) und der zweite Magnetsensor (18) eingerichtet sind, um einen gemeinsamen Inkrementträger (20) magnetisch abzutasten.

2. Sensorvorrichtung (10) nach dem vorhergehenden Anspruch, wobei der erste Magnetsensor (16) und der zweite Magnetsensor (18) zu dem rotierenden Element in radialer Richtung hintereinander angeordnet sind.

3. Sensorvorrichtung (10) nach Anspruch 1, wobei der erste Magnetsensor (16) und der zweite Magnetsensor (18) zu dem rotierenden Element in radialer Richtung nebeneinander angeordnet sind.

4. Sensorvorrichtung (10) nach einem der vorhergehenden Ansprüche, wobei der wenigstens eine Inkrementträger (20) ein Zahnrad ist, wobei das Zahnrad wenigstens teilweise aus einem ferromagnetischen Werkstoff besteht.

5. Sensorvorrichtung (10) nach einem der vorhergehenden Ansprüche, wobei der wenigstens eine Inkrementträger (20) ein magnetisches Multipolrad ist.

6. Sensorvorrichtung (10) nach einem der vorhergehenden Ansprüche, wobei der wenigstens eine Inkrementträger (20) permanentmagnetische Bereiche aufweist und wobei der Inkrementträger (20) zur Bildung von Wirbelströmen eingerichtet ist.

7. Sensorvorrichtung (10) nach einem der vorhergehenden Ansprüche, wobei die Sensorvorrichtung (10) wenigstens eine Auswerteeinheit (22) umfasst, wobei die wenigstens eine Auswerteeinheit (22) eingerichtet ist, um das erste Sensorsignal und/oder das zweite Sensorsignal auszuwerten.

8. Sensorvorrichtung (10) nach dem vorhergehenden Anspruch, wobei die wenigstens eine Auswerteeinheit (22) einen Signalausgang aufweist, wobei die wenigstens eine Auswerteeinheit (22) eingerichtet ist, um an ihrem Signalausgang in Abhängigkeit der Drehzahl des rotierenden Elements lediglich eines der ausgewerteten Sensorsignale bereitzustellen.

9. Sensorsystem (30) zur Bestimmung mindestens einer Rotationseigenschaft eines rotierenden Elements, wobei das Sensorsystem (30) mindestens eine Sensorvorrichtung (10) nach einem der vorhergehenden Ansprüche umfasst, wobei das Sensorsystem (30) weiterhin eine mit der Sensorvorrichtung (10) verbindbare Steuerung (34) umfasst, wobei die Steuerung (34) eingerichtet ist, um in mindestens einem ersten Drehzahlbereich des rotierenden Elements das vom ersten Magnetsensor (16) erzeugte erste Sensorsignal zu erfassen und wobei die Steuerung eingerichtet ist, um in mindestens einem zweiten Drehzahlbereich das vom zweiten Magnetsensor (18) erzeugte zweite Sensorsignal zu erfassen.

## Claims

1. Sensor apparatus (10) for determining at least one rotational property of a rotating element, comprising at least one increment carrier (20) that can be connected to the rotating element, the sensor apparatus (10) comprising at least one magnetic field generator (12) for generating a magnetic field at the location of the rotating element, the sensor apparatus (10) having at least a first magnetic sensor (16) and at least a second magnetic sensor (18), the first magnetic sensor (16) generating a first sensor signal and the second magnetic sensor (18) generating a second sensor signal, the first magnetic sensor (16) being an inductive sensor, the first magnetic sensor (16) having at least one coil and being set up to detect a magnetic field generated or changed by eddy currents of the rotating element, the second magnetic sensor (18) being an active sensor, the second magnetic sensor (18) having at least one Hall element and/or at least one magneto-resistive element,
**characterized in that** the first magnetic sensor (16) and the second magnetic sensor (18) are set up to sense a common increment carrier (20) magnetically.

2. Sensor apparatus (10) according to the preceding claim, wherein the first magnetic sensor (16) and the second magnetic sensor (18) are arranged one after the other in the radial direction relative to the rotating element.

3. Sensor apparatus (10) according to Claim 1, wherein the first magnetic sensor (16) and the second magnetic sensor (18) are arranged beside each other in the radial direction relative to the rotating element.

4. Sensor apparatus (10) according to one of the preceding claims, wherein the at least one increment carrier (20) is a gear wheel, wherein the gear wheel consists at least partly of a ferromagnetic material.

5. Sensor apparatus (10), according to one of the preceding claims, wherein the at least one increment carrier (20) is a magnetic multi-pole wheel.

6. Sensor apparatus (10) according to one of the preceding claims, wherein the at least one increment carrier (20) has permanent magnetic areas, and wherein the increment carrier (20) is set up to form eddy currents.

7. Sensor apparatus (10) according to one of the preceding claims, wherein the sensor apparatus (10) comprises at least one evaluation unit (22), wherein the at least one evaluation unit (22) is set up to evaluate the first sensor signal and/or the second sensor signal.

8. Sensor apparatus (10) according to the preceding claim, wherein the at least one evaluation unit (22) has a signal output, wherein the at least one evaluation unit (22) is set up to provide only one of the evaluated sensor signals on its signal output, depending on the rotational speed of the rotating element.

9. Sensor system (30) for determining at least one rotational property of a rotating element, wherein the sensor system (30) comprises at least one sensor apparatus (10) according to one of the preceding claims, wherein the sensor system (30) also comprises a controller (34) that can be connected to the sensor apparatus (10), wherein the controller (34) is set up to detect the first sensor signal generated by the first magnetic sensor (16) in at least one first rotational speed range of the rotating element, and wherein the controller is set up to detect the second sensor signal generated by the second magnetic sensor (18) in at least one second rotational speed range.

## Revendications

1. Dispositif à capteur (10) destiné à déterminer au moins une propriété de rotation d'un élément en rotation, comprenant au moins un support incrémental (20) pouvant être relié à l'élément en rotation, dans lequel le dispositif à capteur (10) comprend au moins un générateur de champ magnétique (12) destiné à générer un champ magnétique à l'endroit de l'élément en rotation, dans lequel le dispositif à capteur (10) comporte au moins un premier capteur magnétique (16) et au moins un deuxième capteur magnétique (18), dans lequel le premier capteur magnétique (16) génère un premier signal de capteur et le deuxième capteur magnétique (18) génère un deuxième signal de capteur, dans lequel le premier capteur magnétique (16) est un capteur inductif, dans lequel le premier capteur magnétique (16) comporte au moins une bobine et est conçu pour détecter un champ magnétique généré ou modifié par des courants de Foucault de l'élément en rotation, dans lequel le deuxième capteur magnétique (18) est un capteur actif, dans lequel le deuxième capteur magnétique (18) comporte au moins un élément à effet Hall et/ou au moins un élément magnétorésistif, **caractérisé en ce que** le premier capteur magnétique (16) et le deuxième capteur magnétique (18) sont conçus pour échantillonner magnétiquement un support incrémental (20) commun.

2. Dispositif à capteur (10) selon la revendication précédente, dans lequel le premier capteur magnétique (16) et le deuxième capteur magnétique (18) sont disposés à l'arrière l'un dé l'autre par rapport à la direction radiale de l'élément en rotation.

3. Dispositif à capteur (10) selon la revendication 1, dans lequel le premier capteur magnétique (16) et le deuxième capteur magnétique (18) sont disposés côte à côte par rapport à la direction radiale de l'élément en rotation.

4. Dispositif à capteur (10) selon l'une quelconque des revendications précédentes, dans lequel l'au moins un support incrémental (20) est une roue dentée, dans lequel la roue dentée est constituée au moins en partie d'un matériau ferromagnétique.

5. Dispositif à capteur (10) selon l'une quelconque des revendications précédentes, dans lequel l'au moins un support incrémental (20) est une roue multipôle magnétique.

6. Dispositif à capteur (10) selon l'une quelconque des revendications précédentes, dans lequel l'au moins un support incrémental (20) présente des zones à magnétisation permanente et dans lequel le support incrémental (20) est conçu pour créer des courants de Foucault.

7. Dispositif à capteur (10) selon l'une quelconque des revendications précédentes, dans lequel le dispositif à capteur (10) comprend au moins une unité d'évaluation (22), dans lequel l'au moins une unité d'évaluation (22) est conçue pour évaluer le premier signal de capteur et/ou le deuxième signal de capteur.

8. Dispositif à capteur (10) selon la revendication précédente, dans lequel l'au moins une unité d'évaluation (22) comporte une sortie de signal, dans lequel l'au moins une unité d'évaluation (22) est conçue pour ne fournir à sa sortie de signal, en fonction de la vitesse de rotation de l'élément en rotation, que l'un des signaux de capteurs évalués.

9. Système de capteur (30) destiné à déterminer au moins une propriété de rotation d'un élément en rotation, dans lequel le système de capteur (30) comprend au moins un dispositif à capteur (10) selon l'une quelconque des revendications précédentes, dans lequel le système de capteur (30) comprend en outre une unité de commande (34) pouvant être reliée au dispositif à capteur (10), dans lequel l'unité de commande (34) est conçue pour détecter le premier signal de capteur généré par le premier capteur magnétique (16) dans au moins une première plage de vitesses de rotation et dans lequel l'unité de commande est conçue pour détecter le deuxième signal de capteur généré par le deuxième capteur magnétique (18) dans au moins une deuxième plage de vitesses de rotation.
